# EUROPÄISCHE PATENTSCHRIFT

(11) **EP 2 412 569 B1**
(45) Veröffentlichungstag und Bekanntmachung des Hinweises auf die Patenterteilung: **09.04.2014**
(21) Anmeldenummer: 11172890.3
(22) Anmeldetag: 06.07.2011
(51) Int. Cl.: B60N 2/60, B60N 2/58

(54) **Sitz für ein Kraftfahrzeug**
Seat for a motor vehicle
Siège pour véhicule automobile

(30) Priorität: 28.07.2010 DE 102010032542; 31.08.2010 DE 102010040026
(43) Veröffentlichungstag der Anmeldung: 01.02.2012
(73) Patentinhaber: METZELER SCHAUM GMBH, 87700 Memmingen (DE)
(72) Erfinder: Kosar, Kay, 87767 Niederrieden (DE); Kadereit, Lutz, 38550 Isenbüttel (DE); Blank, Roland, 87776 Attenhausen (DE); Kühnemann, David, 89281 Altenstadt-Filzingen (DE); Peter, Berger, 87779 Trunkelsberg (DE); Dr. Hohenhorst, Manfred, 88430 Rot a. d. Rot (DE)
(74) Vertreter: Schober, Christoph D.

(56) Entgegenhaltungen:
- EP-A2- 2 075 156
- WO-A2-2007/008662
- DE-A1-102005 013 613
- DE-B1- 1 654 229

## Beschreibung

Die Erfindung betrifft einen Sitz für ein Kraftfahrzeug. Der Sitz umfasst ein Sitzgestell, ein Polster, das auf dem Sitzgestell angeordnet ist und aus einem Schaumstoff besteht, einem Bezug, der das Polster bedeckt und der einen an dem Polster bleibend angeordneten Teilbezug und einen von dem Polster abnehmbaren Wechselbezug umfasst, und ein Befestigungsmittel, mittels dem der Wechselbezug reversibel an dem Polster befestigbar ist. Das Befestigungsmittel weist ein polsterseitiges Befestigungsteil, das an dem Polster befestigt ist, und ein bezugsseitiges Befestigungsteil, das an dem Wechselbezug befestigt ist, auf. Das polsterseitige Befestigungsteil und das bezugsseitige Befestigungsteil sind lösbar miteinander verbunden.

Ein Sitz für ein Kraftfahrzeug ist aus KR 10 2004 010 6749 A bekannt. Der Sitz weist einen Bezug auf, der aus einem Sitzflächenbezug und einem Lehnenbezug zusammengesetzt ist. Eine Rückenlehne ist mit einem Sitzpolster verbunden und stützt den Rücken und den Kopf eines Benutzers. Der Bezug ist wiederabnehmbar auf der Vorderseite des Sitzpolsters und der Rückenlehne mit Hilfe eines Reißverschlusses verbunden.

Ferner ist aus FR 2 781 733 ein Sitz für ein Kraftfahrzeug bekannt. Der Sitz umfasst ein Sitzpolster und eine Rückenlehne. Ein einteiliger Bezug ist mittels eines Reißverschlusses passagierseitig am Sitz angeordnet, und erstreckt sich über eine Sitzfläche und eine Rückenstützfläche.

DE 10 2005 013 613 A1 offenbart einen Kraftfahrzeugsitz mit einem Polsterkörper und einem daran abgehefteten Bezug. Der Bezug besteht aus mindestens einem Anlehn- beziehungsweise Aufsitzflächen-Bezugteil und mindestens einem Seitenwulst-Bezugteil, die an den Abheftstellen miteinander mittels eines Reißverschlusses verbunden sind. Das Aufsitzflächen-Bezugteil ist an den Abheftstellen mit dem Polsterkörper verbunden. Das Seitenwulst-Bezugteil ist lösbar mit dem Aufsitzflächen-Bezugteil verbunden.

EP 2 075 156 A2 offenbart einen weiteren Sitz für ein Kraftfahrzeug. Der Sitz umfasst ein Sitzpolster und eine Rückenlehne. Das Sitzpolster umfasst einen Wechselbezug, der mittels zweier Reißverschlüsse mit der Sitzfläche des Kraftfahrzeugsitzes verbindbar ist.

DE 1 654 229 B1 offenbart ein Polster für einen Kraftfahrzeugsitz, mit einer elastischen Kunststoffmasse als tragendes Teil des Polsters und einem mit der Kunststoffmasse lösbar verbundenen Bezug. Der Bezug ist formschlüssig in einem in die Kunststoffmasse eingearbeiteten Schlitz festlegbar.

Der Erfindung liegt die **Aufgabe** zugrunde, einen verbesserten Sitz vorzuschlagen.

Zur Lösung dieser Aufgabe wird ein Sitz gemäß Anspruch 1 vorgeschlagen. Vorteilhafte Ausgestaltungen der Erfindung sind in den Ansprüchen 2 bis 14 beschrieben.

Das polsterseitige Befestigungsteil des erfindungsgemäßen Sitzes ist in den Schaumstoff des Polsters eingelegt und/oder mit dem Sitzgestell verbunden. Der erfindungsgemäße Sitz bietet den Vorteil, dass der Wechselbezug mit einer ausreichenden Spannung am Sitz befestigt werden kann, und sich so an die Konturen des Sitzes besser anschmiegt. Somit ist der Sitz rein äußerlich nicht von einem Sitz mit einem herkömmlichen Bezug zu unterscheiden.

In einer bevorzugten Ausgestaltung ist das polsterseitige Befestigungsteil zumindest teilweise in dem Schaumstoff eingeschäumt. Dadurch wird das polsterseitige Befestigungsteil form- und/oder stoffschlüssig mit dem Schaumstoff des Polsters verbunden. Somit kann das polsterseitige Befestigungsteil hohe Kräfte aufnehmen, wodurch der Wechselbezug mit einer hohen Spannung am Polster befestigt werden kann. Weiterhin ist durch diese Ausgestaltung des polsterseitigen Befestigungsteils gewährleistet, dass dieses nicht aus dem Polster, insbesondere auf einer Sitzfläche des Sitzes, herausragt, was nicht nur das optische Erscheinungsbild des Sitzes beeinträchtigen, sondern auch den Sitzkomfort eines Benutzers vermindern würde.

Erfindungsgemäß ist an dem Teilbezug und/oder an dem Wechselbezug eine Öffnung vorgesehen, die den Zugriff auf das Befestigungsmittel ermöglicht. Durch diese Ausgestaltung kann das polsterseitige Befestigungsteil derart angeordnet sein, dass es von außen nicht einsehbar ist, wodurch das äußere Erscheinungsbild des erfindungsgemäßen Sitzes einem eines herkömmlichen Sitzes gleicht. Weiterhin ist somit gewährleistet, dass selbst ein Laie oder ein Ungeübter in einfacher Weise den Wechselbezug von dem erfindungsgemäßen Sitz lösen kann.

Erfindungsgemäß ist der Sitz durch ein Verschlussmittel gekennzeichnet, das zum Verschließen der Öffnung dient.

Vorzugsweise umfasst das Verschlussmittel wenigstens einen Reißverschluss und/oder wenigstens einen Klettverschluss und/oder wenigstens einen Druckknopf.

Bevorzugterweise ist der Sitz durch eine einem Benutzer des Sitzes zugewandte Benutzungsfläche gekennzeichnet, die durch den Wechselbezug gebildet ist. Diese Ausgestaltung bietet den Vorteil, dass die Benutzungsfläche, die durch den Gebrauch am häufigsten beansprucht wird und am häufigsten zur Verschmutzung neigt, in einfacher Weise, durch das Wechseln des Wechselbezugs, ausgetauscht werden kann.

Bevorzugterweise ist der Sitz durch ein Sitzteil und/oder eine Rückenlehne und/oder eine Kopfstütze gekennzeichnet, wobei die Benutzungsfläche sich über das Sitzteil und/oder die Rückenlehne und/oder die Kopfstütze erstreckt. Durch diese Ausgestaltung kann der Wechselbezug an die Form und die Anforderungen des Sitzes angepasst werden, unabhängig davon, ob beispielsweise die Kopfstütze ein integraler Bestandteil der Rückenlehne, oder separat von dieser angeordnet ist.

In einer bevorzugten Ausgestaltung besteht der Wechselbezug und/oder der Teilbezug aus einem textilen Material und/oder aus Kunststoff und/oder aus Leder. Erfindungsgemäß weist der Wechselbezug auf der einen Benutzer des Sitzes abgewandten Seite eine Charmeuse und vorzugsweise darunter eine Schaumstoffkaschierung auf.

Die Charmeuse sorgt dabei für ein verbessertes Erscheinungsbild des Wechselbezugs im abgenommenen Zustand. Die Schaumstoffkaschierung erhöht den Sitzkomfort des Passagiers, auch dann, wenn etwaige, durch innere Befestigungsmittel verursachte, auf der Sitzfläche sich befindende Unebenheiten vorhanden sind.

Vorzugsweise weist das Polster wenigstens eine Vertiefung auf, wobei vorzugsweise das polsterseitige Befestigungsteil in der Vertiefung angeordnet ist.

Diese Ausgestaltung bietet den Vorteil, dass sich der Wechselbezug noch besser an die Konturen des Sitzes anschmiegt. Weiterhin wird ein hoher Sitzkomfort für den Passagier gewährleistet, da das polsterseitige Befestigungsteil, für den Passagier, der auf dem Sitz Platz genommen hat, nicht direkt an seinem Rücken oder seinem Gesäß wahrnehmbar sind, da das polsterseitige Befestigungsteil in den Vertiefungen liegend in keinem direkten Kontakt zum Passagier steht und dieser alleine durch Sitzpolster und Rückenlehne gestützt wird.

Weiterhin vorzugsweise umfasst das bezugsseitige Befestigungsteil wenigstens einen Befestigungsstrang, der mit dem polsterseitigen Befestigungsteil lösbar und vorzugsweise formschlüssig verbunden ist, auf.

Bevorzugt umfasst das bezugsseitige Befestigungsteil wenigstens eine Lasche, wobei der Befestigungsstrang formschlüssig und lösbar in der Lasche aufgenommen ist.

In einer weiteren bevorzugten Ausgestaltung weist der Befestigungsstrang wenigstens eine Öse und das polsterseitige Befestigungsteil wenigstens einen Haken auf, wobei der Haken mit der Öse lösbar verbunden ist.

Diese Ausgestaltung bietet den Vorteil, dass selbst ein Laie oder ein Ungeübter den Wechselbezug leicht in reversibler Weise von dem Sitz trennen, und an dem Sitz befestigen kann. Die Konturen des Sitzes können somit detailgenau und präzise nachgezeichnet werden, so dass der Sitz äußerlich nicht von einem konventionellen Sitz zu unterscheiden ist. Weiterhin ist gewährleistet, dass beispielsweise zum Reinigen des Wechselbezuges der Befestigungsstrang von der Lasche gelöst, und somit vom Wechselbezug getrennt werden kann.

Weiterhin vorzugsweise besteht der Befestigungsstrang aus Draht, vorzugsweise aus Federstahldraht, und/oder aus Kunststoff.

In einer weiteren bevorzugten Ausgestaltung weist das polsterseitige Befestigungsteil wenigstens eine erste Hülse und das bezugsseitige Befestigungsteil wenigstens einen Stift, der mit der ersten Hülse lösbar verbunden ist, auf.

Weiterhin vorzugsweise umfasst das polsterseitige Befestigungsteil wenigstens einen Bügel, wobei die erste Hülse an dem Bügel befestigt ist und wobei vorzugsweise der Bügel in den Schaumstoff eingelegt, weiterhin vorzugsweise in den Schaumstoff eingeschäumt ist. Alternativ oder zusätzlich kann Bügel auch an dem Sitzgestell befestigt sein.

Bevorzugterweise weist das polterseitige Befestigungsteil wenigstens eine Lochscheibe, die vorzugsweise in den Schaumstoff eingelegt, weiterhin vorzugsweise in dem Schaumstoff eingeschäumt ist, und vorzugsweise wenigstens einen Verriegelungsclip, der formschlüssig mit der Lochscheibe verbunden ist, auf, und das bezugsseitige Befestigungsteil weist eine zweite Hülse auf, die mit dem Verriegelungsclip lösbar verbunden ist.

Diese Ausgestaltung ermöglicht es ebenfalls dem Laien und dem Ungeübten den Wechselbezug in einfacher und reversibler Weise an dem Sitz anzubringen beziehungsweise von dem Sitz zu lösen.

Nachfolgend wird die Erfindung anhand zweier Ausführungsbeispiele näher beschrieben, die in den Zeichnungen in schematischer Weise dargestellt sind. Hierin zeigen:
- Fig. 1: eine perspektivische Ansicht des erfindungsgemäßen Sitzes in einer ersten Ausführungsform;
- Fig. 2: eine perspektivische Ansicht des Sitzflächenbezuges, des Lehnenbezuges sowie des entlang einer Vertiefung aufgeschnittenen Sitzes der ersten Ausführungsform;
- Fig. 3: eine perspektivische Ansicht des Sitzflächenbezuges und des Lehnenbezuges der ersten Ausführungsform;
- Fig. 4: eine perspektivische Ansicht des Sitzflächenbezuges und des Lehnenbezuges in der ersten Ausführungsform mit abgenommenen Einlegern;
- Fig. 5: eine schematische Ansicht des Sitzteils in der zweiten Ausführungsform;
- Fig. 6: eine schematische Ansicht der Rückenlehne einer zweiten Ausführungsform;
- Fig. 7: eine perspektivische Ansicht des Befestigungsmittels der zweiten Ausführungsform;
- Fig. 8: eine perspektivische Ansicht einer alternativen Ausgestaltung des Befestigungsmittels der zweiten Ausführungsform;
- Fig. 9: eine perspektivische Ansicht der Lochscheibe, des Verriegelungsclips und der zweiten Hülse der zweiten Ausführungsform;
- Fig. 10: eine perspektivische Ansicht der ersten Hülse und des Stiftes mit Quergang der zweiten Ausführungsform;
- Fig. 11: eine perspektivische Ansicht des Stiftes ohne Quergang der zweiten Ausführungsform;
- Fig. 12: eine perspektivische Ansicht einer zweiten Hülse mit Quergang der zweiten Ausführungsform;
- Fig. 13: eine perspektivische Ansicht des Verbindungsstrangs der zweiten Ausführungsform;
- Fig. 14: eine perspektivische Ansicht des Verriegelungsclips der zweiten Ausführungsform;
- Fig. 15: eine perspektivische Ansicht der ersten Hülse der zweiten Ausführungsform;
- Fig. 16: eine perspektivische Ansicht der Lochscheibe der zweiten Ausführungsform;
- Fig. 17: eine perspektivische Ansicht des Bügels der zweiten Ausführungsform;
- Fig. 18: eine perspektivische Ansicht des Stifts mit Quergang der zweiten Ausführungsform;
- Fig. 19: eine perspektivische Ansicht der zweiten Hülse ohne Quergang der zweiten Ausführungsform;

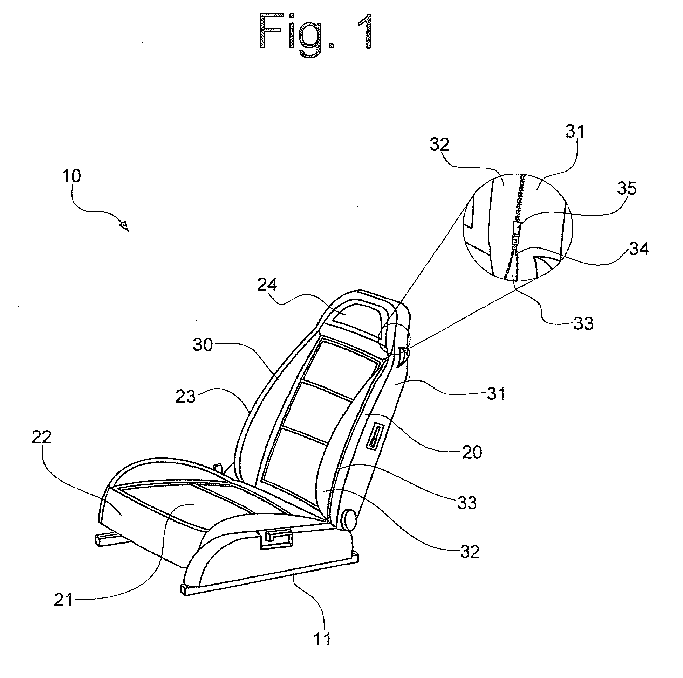

Fig. 1 zeigt eine perspektivische Ansicht des erfindungsgemäßen Sitzes 10, für ein Kraftfahrzeug 100, zur Aufnahme eines Benutzers 110. Der Sitz 10 umfasst ein Sitzgestell 11, ein Polster 20, einen Bezug 30 und ein Befestigungsmittel 40. Das Polster 20 umfasst ein Sitzteil 22, eine Rückenlehne 23 und eine Kopfstütze 24, und weist eine Benutzungsfläche 21 auf. Weiterhin weist das Polster 20 wenigstens eine Vertiefung 25 auf, die sowohl auf dem Sitzteil 22 als auch auf der Rückenlehne 23 und der Kopfstütze 24, vorzugsweise auf der Benutzungsfläche 21 angeordnet ist. Die wenigstens eine Vertiefung 25 kann vorzugsweise parallel oder quer zum Benutzer 110 verlaufen. Das Polster 20 ermöglicht es dem Benutzer 110 komfortabel zu sitzen und federt während der Fahrt durch Fahrbahnunebenheiten bedingte Bewegungen des Kraftfahrzeugs 100 gegenüber dem Benutzer 110 ab.

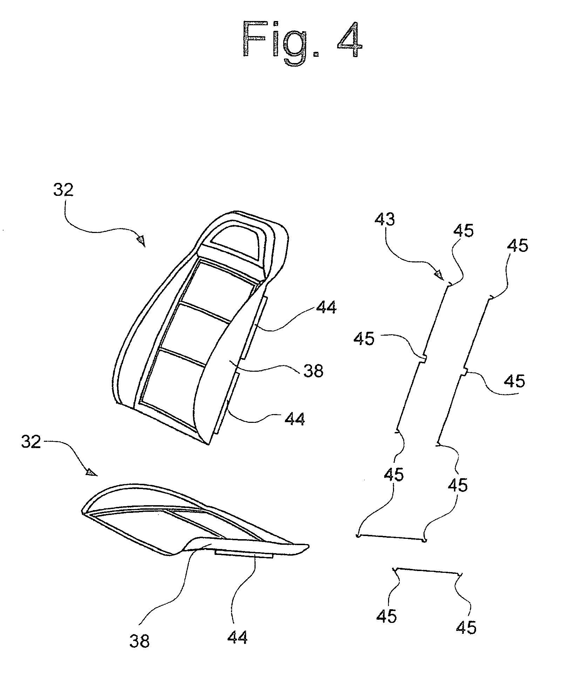

Der Bezug 30 setzt sich aus einem Teilbezug 31 und einem Wechselbezug 32 zusammen. Vorzugsweise ist der Teilbezug 31 formschlüssig mit dem Polster 20 verbunden. Eine Öffnung 33 ist zwischen dem Teilbezug 31 und Wechselbezug 32 angeordnet und ermöglicht den Zugang auf die Befestigungsmittel 40. Alternativ kann die Öffnung 33 auch an dem Teilbezug 31 oder dem Wechselbezug 32 angeordnet sein. Wie insbesondere Fig. 1 zu erkennen gibt, kann die Öffnung 33 mit einem Verschlussmittel 34 versehen sein. Somit wird dem Benutzer 110 der Blick auf das Polster 20 und die Befestigungsmittel 40 verwehrt. Das Verschlussmittel 34 weist einen Reißverschluss 35 auf, kann aber auch einen Klettverschluss und/oder einen Druckknopf umfassen. Wie insbesondere die Fig. 1 bis 4 zu erkennen geben, weist der Bezug 30 insbesondere der Wechselbezug 32 eine Charmeuse 38 und kann darunter eine Schaumstoffkaschierung aufweisen.

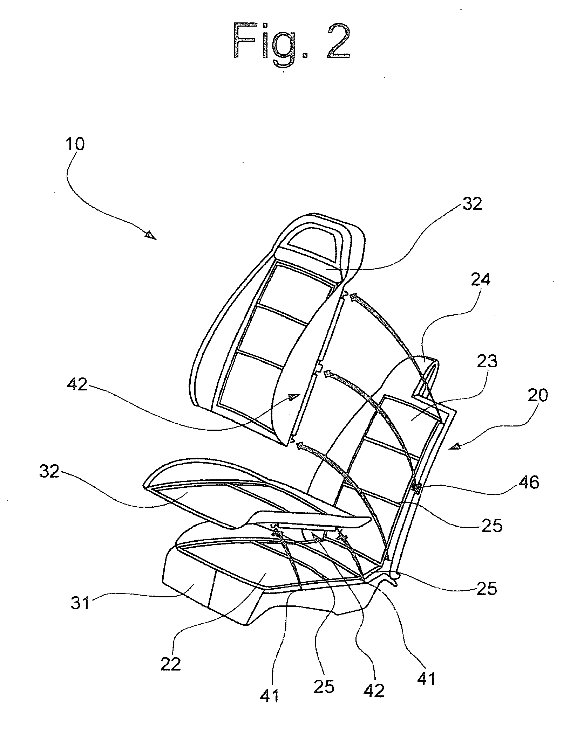

Wie insbesondere den Fig. 2 bis 4 zu entnehmen ist, zeichnet sich die erste Ausführungsform des erfindungsgemäßen Sitzes 10 insbesondere durch die Ausgestaltung des inneren Befestigungsmittels 40, das sich aus einem polsterseitigen Befestigungsteil 41 und einem bezugsseitigen Befestigungsteil 42 zusammensetzt, aus. Das polsterseitige Befestigungsteil 41 ist an dem Polster 20, vorzugsweise entlang der Vertiefungen 25 angeordnet. Wie insbesondere die Fig. 2 zu erkennen gibt, weist das polsterseitige Befestigungsteil 41 wenigstens einen Haken 46 auf, der entlang der Vertiefung 25 angeordnet ist. Somit ist gewährleistet, dass der Sitzkomfort des Benutzers 110 nicht durch den Haken 46 beeinträchtigt wird. Auf Seite des Wechselbezugs 32 ist das bezugsseitige Befestigungsteil 42 angeordnet. Das bezugsseitige Befestigungsteil 42 weist wenigstens einen Befestigungsstrang 43 und wenigstens eine Lasche 44 auf. Vorzugsweise ist der Befestigungsstrang 43 aus Draht, weiterhin vorzugsweise aus Federstahldraht gefertigt. Alternativ kann der Befestigungsstrang 43 auch aus einem Kunststoff hergestellt sein. Der Befestigungsstrang 43 bildet wenigstens eine Öse 45 aus, die mit dem Haken 46 in Eingriff gebracht werden kann. Der Befestigungsstrang 43 ist durch eine Lasche 44 umschlungen, die am Wechselbezug 32 befestigt ist. Vorzugsweise sind die Laschen 44 am Wechselbezug 32 angenäht. Die Lasche 44 umschlingt vorzugsweise den Befestigungsstrang 43 in den Bereichen, an welchen sich keine der Ösen 45 befinden. Bevorzugterweise ist der Befestigungsstrang 43 derart angeordnet, dass er in der Vertiefung 25 des Polsters 20, in eingebautem Zustand des Wechselbezuges 32, aufgenommen ist. Vorzugsweise verläuft die wenigstens eine Vertiefung 25 längs des Benutzers 110, oder quer zum Benutzer 110.

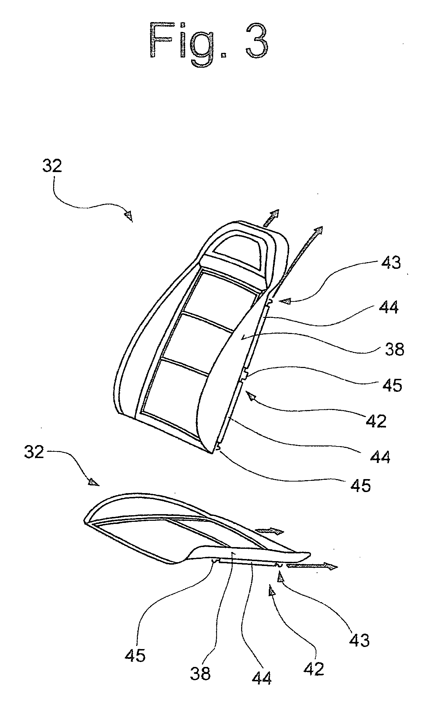

Wie insbesondere aus Fig. 3 zu entnehmen ist, ist der Befestigungsstrang 43 und die Lasche 44 derart ausgebildet, dass der Befestigungsstrang 43 in einfacher Art und Weise von der Lasche 44, und somit auch von dem Wechselbezug 32, lösbar ist.

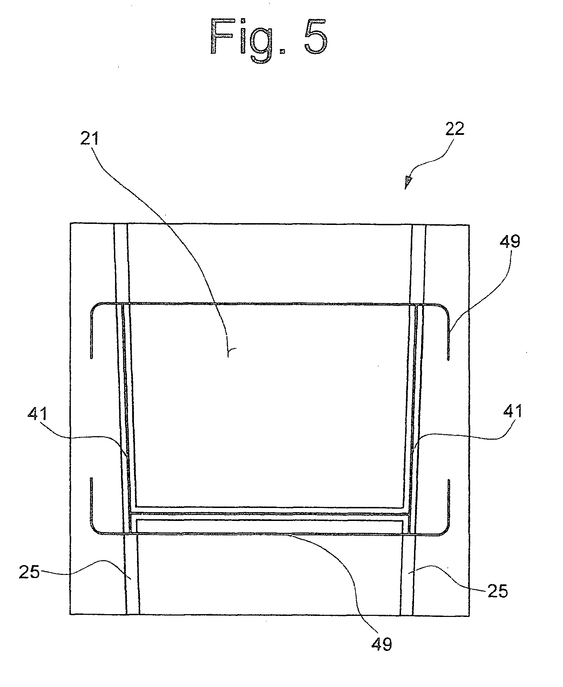

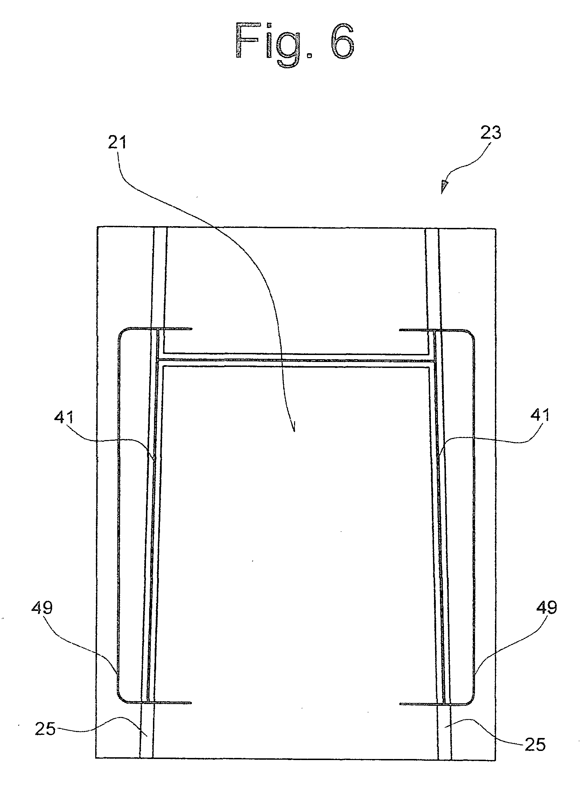

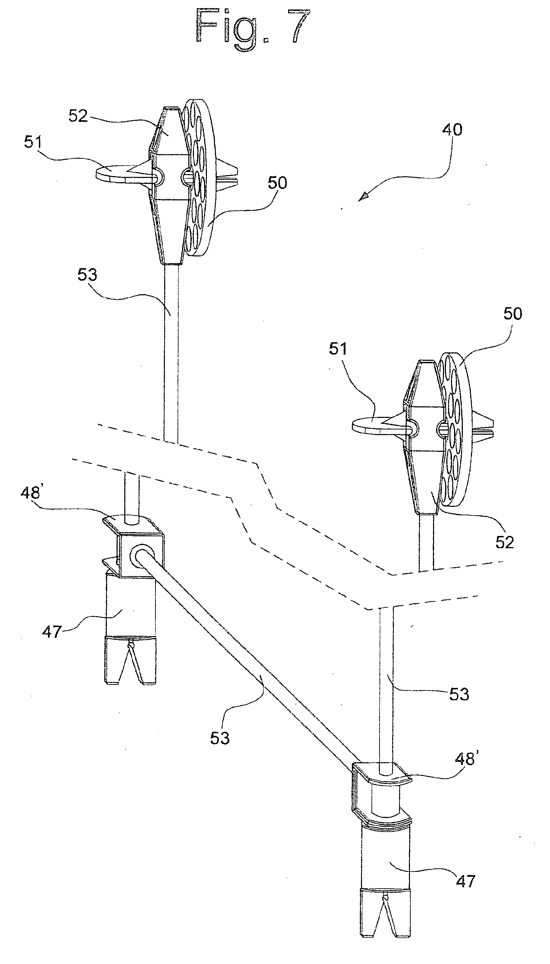

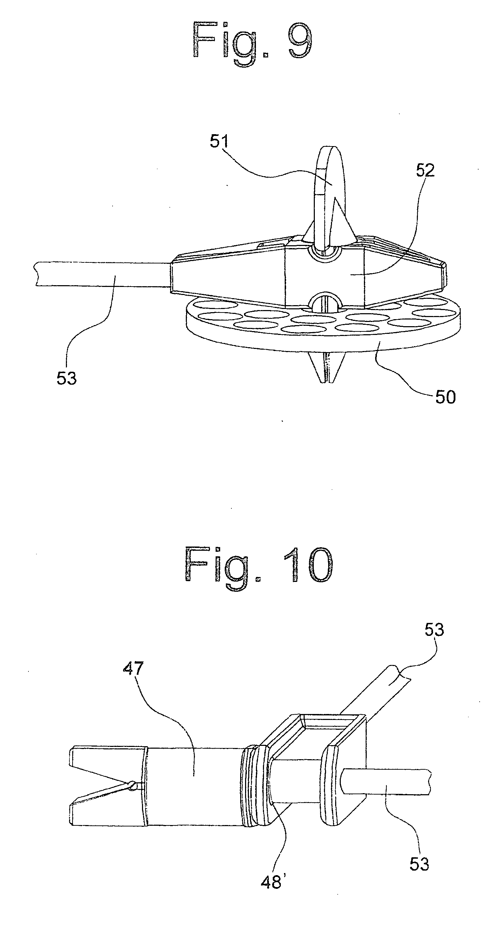

Die in den Fig. 5 bis 19 wiedergegebene Ausführungsform zeichnet sich ebenfalls durch die Ausgestaltung ihres Befestigungsmittels 40 aus. Wie insbesondere den Fig. 5 und 6 zu entnehmen ist, zeichnet sich das polsterseitige Befestigungsteil 41 insbesondere durch die Bügel 49 aus. Die Bügel 49 sind in den Schaumstoff des Polsters 20, sowohl am Sitzteil 22 als auch an der Rückenlehne 23, eingelegt, vorzugsweise eingeschäumt. Die Bügel 49 weisen ein Mittelstück 74 und zwei abgewinkelte Enden 73 auf, wobei der Winkel zwischen Mittelstück 74 und den Enden 73 vorzugsweise annähernd 90° beträgt. Die am Sitzteil 22 angeordneten Bügel 49 verlaufen im Wesentlichen quer zum Benutzer 110 und die an der Rückenlehne 23 angeordneten Bügel 49 verlaufen im Wesentlichen längs zum Benutzer 110. Alternativ können die Bügel 49, in umgekehrter Weise, am Sitzteil 22 längs zum Benutzer 110 verlaufen und an der Rückenlehne 23 quer zum Benutzer 110 verlaufen. Wahlweise können auch die Bügel 49 sowohl des Sitzteils 22 als auch der Rückenlehne 23 quer zum oder längs des Benutzers 110 verlaufen. Die weiteren Bestandteile des polsterseitigen Befestigungsteils 41, sowie die Bestandteile des bezugsseitigen Befestigungsteils 42, die in den Fig. 7 bis 19 weiter beschrieben sind, verlaufen entlang der am Polster 20 angeordneten Vertiefungen 25. Somit ist gewährleistet, dass der Sitzkomfort des Benutzers 110 nicht durch das polsterseitige Befestigungsteil 41 beeinträchtigt wird. Die restlichen Bestandteile des polsterseitigen Befestigungsteils 41, sowie die Bestandteile des bezugsseitigen Befestigungsteils 42, die in den Fig. 5 und 6 nur schematisch angedeutet sind, sind mit dem Bügel 49, wahlweise am Mittelstück 74 oder an den Enden 73, verbunden.

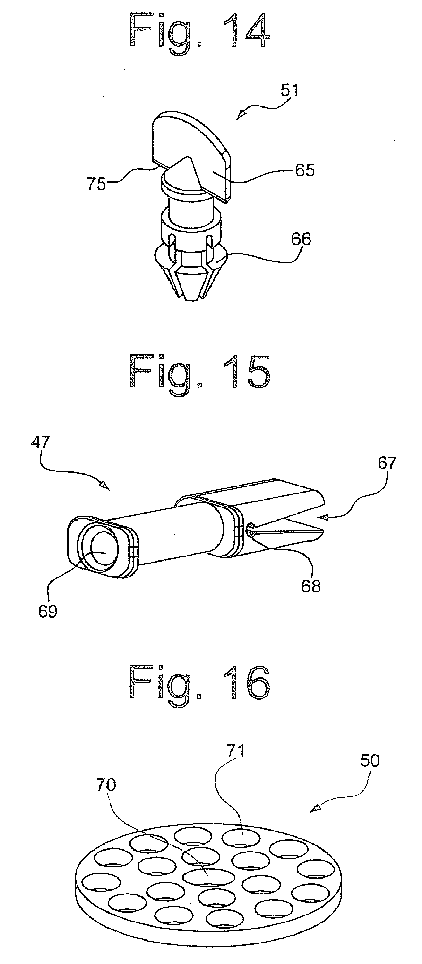

Das polsterseitige Befestigungsteil 41 der zweiten Ausführungsform setzt sich weiterhin aus wenigstens einer ersten Hülse 47 zusammen, die mit dem Bügel 49 verbunden ist. Wie insbesondere die Fig. 15 zu erkennen gibt, weist die erste Hülse 47 eine Aufsteckhilfe 67 auf, die vorzugsweise trichterförmig ausgebildet ist. Die Aufsteckhilfe 67 erleichtert das Aufstecken der ersten Hülse 47 auf den Bügel 49 indem sie den Bügel 49 in einen Befestigungsbereich 68 führt. Das polsterseitige Befestigungsteil umfasst weiterhin wenigstens eine Lochscheibe 50, die in dem Schaumstoff des Polsters 20 eingebracht, vorzugsweise eingeschäumt ist. Die Lochscheibe weist ein Mittelloch 70 auf, an welchem ein Verriegelungsclip 51 angeordnet ist. Der Verriegelungsclip 51 ist dabei formschlüssig mit der Lochscheibe 50 verbunden. Der Verriegelungsclip 51 ist mit seiner Achse entlang der Achse des Mittellochs 40 und um seine Achse drehbar angeordnet. Weiterhin weist die Lochscheibe 50 wenigstens ein Randloch 71 auf, das fern von der Achse der Lochscheibe 50 angeordnet ist und vorzugsweise in dem Schaumstoff des Polsters 20 eingeschäumt ist. Dadurch wird der Formschluss, der durch den Schaumstoff gegenüber der Lochscheibe 50 erzielt wird, verbessert. Durch die drehbare Anordnung des Verriegelungsclips 51 können keine Normalkräfte, die quer zur Achse des Mittellochs 70 der Lochscheibe 50 verlaufen, auf die Lochscheibe 50 übertragen werden. Somit wird gewährleistet, dass die Lochscheibe 50 nicht durch eine durch eine Rotationsbewegung verursachte Scherkraft aus dem Schaumstoff des Polsters 20 herausgedreht werden kann. Der Verriegelungsclip 51 weist einen Griff 65 und einen Befestigungsabschnitt 66 auf. Der Befestigungsabschnitt 66 ermöglicht den Formschluss zwischen Verriegelungsclip 51 und Lochscheibe 50, wobei der Verriegelungsclip 51 drehbar an der Lochscheibe 50 angeordnet ist. Der Griff 65 erleichtert die Handhabung des Verriegelungsclips 51 und bildet gleichzeitig einen Anschlag 75, der das bezugsseitige Befestigungsteil 42 formschlüssig festhält.

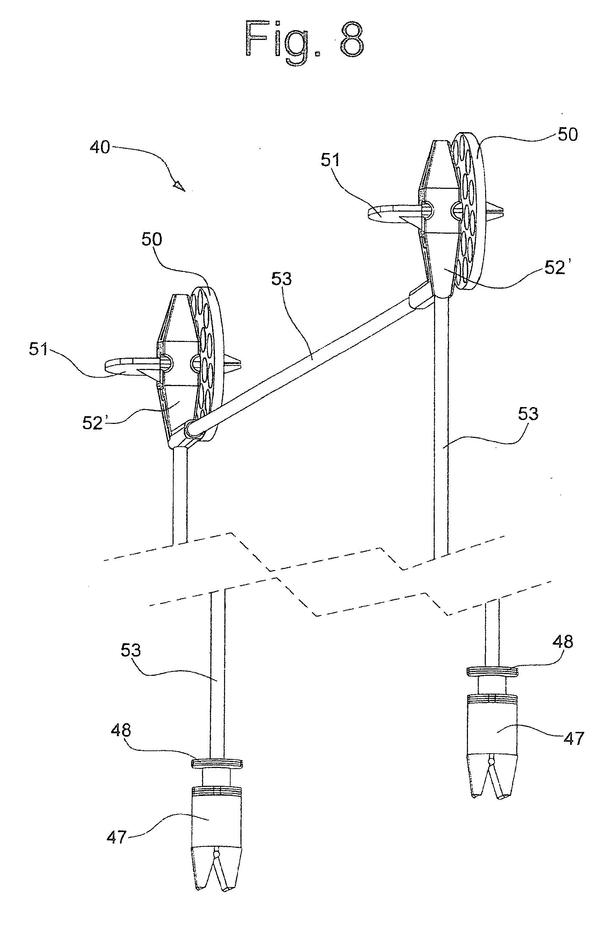

Das bezugsseitige Befestigungsteil 42, wie es in Fig. 7 zu erkennen ist, weist zwei Stifte 48' mit einem Querabgang 72 auf, die miteinander durch einen Verbindungsstrang 53 verbunden sind. Weiterhin sind die Stifte 48' mit Querabgang 72 mittels eines weiteren Verbindungsstrangs 53 mit einer zweiten Hülse 52 verbunden. In einer in Fig. 8 gezeigten weiteren Ausgestaltung sind zwei zweite Hülsen 52' mit einem Querabgang 59 miteinander durch einen Verbindungsstrang 53 verbunden. Weiterhin sind die zweiten Hülsen 52' mit Querabgang 59 mit einem Stift 48 durch einen Verbindungsstrang 53 verbunden. Beide Ausgestaltungen des bezugsseitigen Befestigungsteils 42weisen zwei Stifte 48, 48' und zwei zweite Hülsen 52, 52', die jeweils mit oder ohne Querabgang 59, 72 ausgestaltet sein können. Die Stifte 48, 48' des bezugsseitigen Befestigungsteils 42 sind mit der ersten Hülse 47 des polsterseitigen Befestigungsteils 41 verbunden. Hierfür wird der Stift 48, 48' in eine Öffnung 69 der ersten Hülse 47 bis zu einem Anschlag 67 eingeführt, wodurch der Stift 48, 48' in der ersten Hülse 47 einrastet.

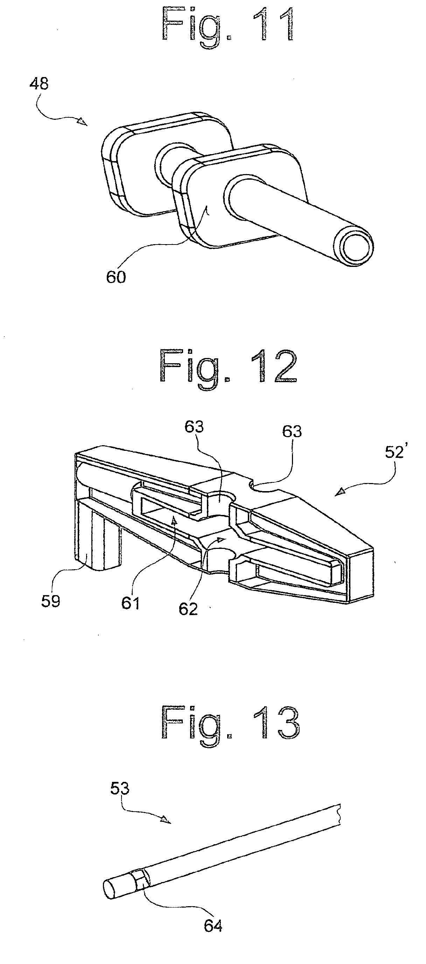

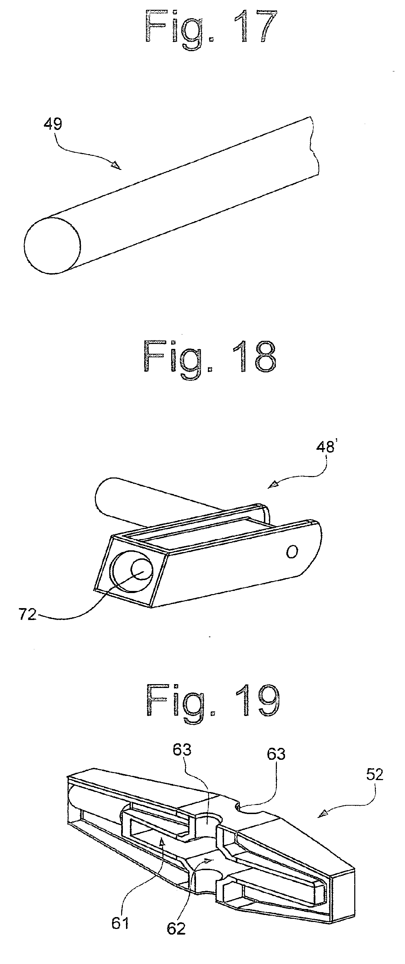

Die zweite Hülse 52, 52' des bezugsseitigen Befestigungsteils 42 ist mittels des Verriegelungsclips 51 mit der Lochscheibe 50 verbunden. Hierfür weist die zweite Hülse 52, 52' einen Schlitz 61, ein Loch 62 und eine Kerbe 63 auf, wie insbesondere die Fig. 12 und 19 zu erkennen geben. Um die zweite Hülse 52, 52' mit dem Verriegelungsclip 51 und der Lochscheibe 50 zu verbinden, wird die Hülse 52, 52' so ausgerichtet, dass sich die Achse des Lochs 62 sowie die Achse des Verriegelungsclips 51 und des Mittellochs 70 der Lochscheibe 50 überlagern, wobei der Verriegelungsclip 51 in eine Orientierung gebracht wird, die den Griff 65 in einer gleichen Ebene ausrichtet, wie den Schlitz 61, so dass die Hülse 52, 52' über den Verriegelungsclip 51 gesteckt werden kann. Anschließend wird der Verriegelungsclip 51 um seine Achse gedreht, so dass der Griff 65 rechtwinklig zum Schlitz 61 angeordnet ist und der Anschlag 75 des Griffs 65 in eine Kerbe 63 der Hülse 52, 52' formschlüssig aufgenommen ist. Die Hülse 52, 52' ist bezüglich einer Ebene, die Quer zur Achse des Lochs 62 verläuft, symmetrisch angeordnet, so dass eine linksseitig angebrachte und eine rechtsseitig angebrachte Hülse 52, 52' mit einem einzigen Spritzgusswerkzeug hergestellt werden kann. Somit ist eine schnelle, einfache und sichere Verbindung zwischen polsterseitigen Befestigungsteil und bezugsseitigem Befestigungsteil möglich.

### Bezugszeichenliste

- 10: Sitz
- 11: Sitzgestell

- 20: Polster
- 21: Benutzungsfläche
- 22: Sitzteil
- 23: Rückenlehne
- 24: Kopfstütze
- 25: Vertiefung

- 30: Bezug
- 31: Teilbezug
- 32: Wechselbezug
- 33: Öffnung
- 34: Verschlussmittel
- 35: Reißverschluss
- 38: Charmeuse

- 40: Befestigungsmittel
- 41: polsterseitiges Befestigungsteil
- 42: bezugsseitiges Befestigungsteil
- 43: Befestigungsstrang
- 44: Lasche
- 45: Öse
- 46: Haken
- 47: erste Hülse
- 48: Stift
- 48': Stift mit Quergang
- 49: Bügel
- 50: Lochscheibe
- 51: Verriegelungsclip
- 52: zweite Hülse
- 52': zweite Hülse mit Quergang
- 53: Verbindungsstrang
- 59: Querabgang
- 60: Anschlag
- 61: Schlitz
- 62: Loch
- 63: Kerbe
- 64: Fixierungsabschnitt
- 65: Griff
- 66: Befestigungsabschnitt
- 67: Aufsteckhilfe
- 68: Befestigungsbereich
- 69: Öffnung
- 70: Mittelloch
- 71: Randloch
- 72: Querabgang
- 73: Ende
- 74: Mittelstück
- 75: Anschlag
- 100: Kraftfahrzeug
- 110: Benutzer

## Patentansprüche

1. Sitz, insbesondere für ein Kraftfahrzeug (100), umfassend:
ein Sitzgestell (11);
ein Polster (20), das auf dem Sitzgestell (11) angeordnet ist und aus einem Schaumstoff besteht;
einen Bezug (30), der das Polster (20) bedeckt und der einen an dem Polster (20) bleibend angeordneten Teilbezug (31) und einen von dem Polster (20) abnehmbaren Wechselbezug (32), der eine einem Benutzer (110) des Sitzes (10) zugewandte Benutzungsfläche (21) bildet und auf der dem Benutzer (110) des Sitzes (10) abgewandten Seite eine Charmeuse (38) aufweist, die geeignet ist, für ein verbessertes Erscheinungsbild des Wechselbezugs (32) im abgenommenen Zustand zu sorgen, umfasst, und
ein Befestigungsmittel (40), mittels dem der Wechselbezug (32) reversibel an dem Polster (20) befestigbar ist;
wobei an dem Teilbezug (31) und/oder an dem Wechselbezug (32) eine Öffnung (33) vorgesehen ist, die den Zugriff auf das Befestigungsmittel (40) ermöglicht,
wobei ein Verschlussmittel (34) vorgesehen ist, das zum Verschließen der Öffnung (33) dient,
wobei das Befestigungsmittel (40) ein polsterseitiges Befestigungsteil (41), das an dem Polster (20) befestigt ist, und ein bezugsseitiges Befestigungsteil (42), das an dem Wechselbezug (32) befestigt ist, aufweist,
wobei das polsterseitige Befestigungsteil (41) und das bezugsseitige Befestigungsteil (42) lösbar miteinander verbunden sind,
wobei das polsterseitige Befestigungsteil (41) in den Schaumstoff eingelegt ist und/oder mit dem Sitzgestell (11) verbunden ist und
wobei das bezugsseitige Befestigungsteil (42) entlang einer Vertiefung (25) des Polsters (20) verläuft und in der Vertiefung (25) aufgenommen ist.

2. Sitz nach Anspruch 1, **dadurch gekennzeichnet, dass** das polsterseitige Befestigungsteil (41) zumindest teilweise in den Schaumstoff eingeschäumt ist.

3. Sitz nach Anspruch 1, **dadurch gekennzeichnet, dass** das Verschlussmittel (34) wenigstens einen Reißverschluss (35) und/oder wenigstens einen Klettverschluss (36) und/oder wenigstens einen Druckknopf (37) umfasst.

4. Sitz nach Anspruch 1, **gekennzeichnet durch**:
ein Sitzteil (22) und/oder
eine Rückenlehne (23) und/oder
eine Kopfstütze (24);
wobei die Benutzungsfläche (21) sich über das Sitzteil (22) und/oder die Rückenlehne (23) und/oder die Kopfstütze (24) erstreckt.

5. Sitz nach einem der Ansprüche 1 bis 4, **dadurch gekennzeichnet, dass** der Wechselbezug (32) und/oder der Teilbezug (31) aus einem textilen Material und/oder aus Kunststoff und/oder aus Leder bestehen.

6. Sitz nach Anspruch 1, **dadurch gekennzeichnet, dass** der Wechselbezug (32) unter der Charmeuse (38) eine Schaumstoffkaschierung (39) aufweist.

7. Sitz nach einem der Ansprüche 1 bis 6, **dadurch gekennzeichnet, dass** das polsterseitige Befestigungsteil (41) in der Vertiefung (25) angeordnet ist.

8. Sitz nach einem der Ansprüche 1 bis 7, **dadurch gekennzeichnet, dass** das bezugsseitige Befestigungsteil (42) wenigstens einen Befestigungsstrang (43) umfasst, der mit dem polsterseitigen Befestigungsteil (41) lösbar und vorzugsweise formschlüssig verbunden ist.

9. Sitz nach Anspruch 8, **dadurch gekennzeichnet, dass** das bezugsseitige Befestigungsteil (42) wenigstens eine Lasche (44) umfasst, wobei der Befestigungsstrang (43) formschlüssig und lösbar in der Lasche (44) aufgenommen ist.

10. Sitz nach Anspruch 8 oder 9, **dadurch gekennzeichnet, dass** der Befestigungsstrang (43) wenigstens eine Öse (45) und das polsterseitige Befestigungsteil (41) wenigstens einen Haken (46) aufweist, wobei der Haken (46) mit der Öse (45) lösbar verbunden ist.

11. Sitz nach einem der Ansprüche 8 bis 10, **dadurch gekennzeichnet, dass** der Befestigungsstrang (43) aus Draht, vorzugsweise aus Federstahldraht, und/oder aus Kunststoff besteht.

12. Sitz nach einem der Ansprüche 1 bis 11, **dadurch gekennzeichnet, dass** das polsterseitige Befestigungsteil (41) wenigstens eine erste Hülse (47) und das bezugsseitige Befestigungsteil (42) wenigstens einen Stift (48), der mit der ersten Hülse (47) lösbar verbunden ist, aufweist.

13. Sitz nach Anspruch 12, **dadurch gekennzeichnet, dass** das polsterseitige Befestigungsteil (41) wenigstens einen Bügel (49) umfasst, wobei die erste Hülse (47) an dem Bügel (49) befestigt ist und wobei vorzugsweise der Bügel (49) in den Schaumstoff eingelegt, weiterhin vorzugsweise in den Schaumstoff eingeschäumt ist.

14. Sitz nach einem der Ansprüche 1 bis 13, **dadurch gekennzeichnet, dass** das polsterseitige Befestigungsteil (41) wenigstens eine Lochscheibe (50), die vorzugsweise in den Schaumstoff eingelegt, weiterhin vorzugsweise in den Schaumstoff eingeschäumt ist, und vorzugsweise wenigstens einen Verriegelungsclip (51), der formschlüssig mit der Lochscheibe (50) verbunden ist, aufweist, und das bezugsseitige Befestigungsteil (42) eine zweite Hülse (52) aufweist, die mit dem Verriegelungsclip (51) lösbar verbunden ist.

## Claims

1. A seat, in particular for a motor vehicle (100), comprising:
a seat frame (11);
a padding (20) disposed on the seat frame (11) and consisting of a foamed material;
a cover (30), which covers the padding (20) and forms a partial cover (31) that is permanently disposed on the padding (20), and a replacement cover (32), which can be removed from the padding (20) and which forms a use surface (21) facing towards the user (110) of the seat (10) and comprises, on the side of the seat (10) facing away from the user (110), a charmeuse (38) suitable for providing for an improved appearance of the replacement cover (32) in the removed state, and
a fastening means (40) by means of which the replacement cover (32) can be reversibly fastened to the padding (20);
wherein an opening (33) is provided on the partial cover (31) and/or the replacement cover (32) which enables access to the fastening means (40),
wherein a closing means (34) is provided that serves for closing the opening (33),
wherein the fastening means (40) comprises a padding-side fastening means (41) fastened to the padding (20) and a cover-side fastening means (42) fastened to the replacement cover (32),
wherein the padding-side fastening part (41) and the cover-side fastening part (42) arte detachably connected to each other,
wherein the padding-side fastening part (41) is inserted into the foamed material and/or connected to the seat frame (11), and
wherein the cover-side fastening part (42) extends along a depression (25) of the padding (20) and is accommodated in the depression (25).

2. The seat according to claim 1, **characterised in that** the padding-side fastening part (41) is at least partially foamed into the foamed material.

3. The seat according to claim 1, **characterised in that** the closing means (34) comprises at least one zipper (35) and/or at least one hook-and-loop closure (36) and/or at least one snap fastener button (37).

4. The seat according to claim 1, **characterised by**:
a seat part (22) and/or
a backrest (23) and/or
a headrest (24);
wherein the use surface (21) extends over the seat part (22) and/or the backrest (23) and/or the headrest (24).

5. The seat according to any one of the claims 1 to 4, **characterised in that** the replacement cover (32) and/or the partial cover (31) consist of a textile material and/or plastic material and/or leather.

6. The seat according to claim 1, **characterised in that** the replacement cover (32) comprises underneath the charmeuse (38) a foam lamination (39).

7. The seat according to any one of the claims 1 to 6, **characterised in that** the padding-side fastening part (41) is disposed in the depression (25).

8. The seat according to any one of the claims 1 to 7, **characterised in that** the cover-side fastening part (42) comprises at least one fastening cable (43) detachably and preferably positively connected with the padding-side fastening part (41).

9. The seat according to claim 8, **characterised in that** the cover-side fastening part (42) comprises at least one tab (44), wherein the fastening cable (43) is positively and detachably accomodated in the tab (44).

10. The seat according to claim 8 or 9, **characterised in that** the fastening cable (43) comprises at least one eyelet (45) and the padding-side fastening part (41) comprises at least one hook (46), wherein the hook (46) is detachably connected with the eyelet (45).

11. The seat according to any one of the claims 8 to 10, **characterised in that** the fastening cable (43) consists of wire, preferably spring steel wire, and/or plastic material.

12. The seat according to any one of the claims 1 to 11, **characterised in that** the padding-side fastening part (41) comprises at least one sleeve (47) and the cover-side fastening part (42) comprises at least one pin (48) which is detachably connected with the first sleeve (47).

13. The seat according to claim 12, **characterised in that** the padding-side fastening part (41) comprises at least one bracket (49), wherein the first sleeve (47) is fastened to the bracket (49) and wherein the bracket (49) is preferably inserted into the foamed material, further preferably foamed into the foamed material.

14. The seat according to any one of the claims 1 to 13, **characterised in that** the padding-side fastening part (41) comprises at least one perforated plate (50), which is preferably inserted into the foamed material, further preferably foamed into the foamed material, and preferably at least one locking clip (51), which is positively connected to the perforated plate (50), and the cover-side fastening part (42) comprises a second sleeve (52), which is detachably connected to the locking clip (51).

## Revendications

1. Siège, en particulier pour un véhicule automobile (100), comprenant :
un bâti de siège (11) ;
un rembourrage (20), qui est agencé sur le bâti de siège (11) et qui est constitué d'une mousse ;
un habillage (30), qui couvre le rembourrage (20) et qui comprend un habillage partiel (31) agencé à demeure sur le rembourrage (20), et un habillage interchangeable (32) susceptible d'être enlevé du rembourrage (20), qui forme une surface d'utilisation (21) tournée vers un utilisateur (110) du siège (10) et qui comporte, du côté détourné de l'utilisateur (110) du siège (10), une charmeuse (38) qui convient à assurer un aspect amélioré de l'habillage interchangeable (32) à l'état enlevé, et
un moyen de fixation (40) au moyen duquel l'habillage interchangeable (32) est susceptible d'être fixé de manière réversible sur le rembourrage (20) ;
dans lequel il est prévu, sur l'habillage partiel (31) et/ou sur l'habillage interchangeable (32), une ouverture (33) qui rend possible l'accès au moyen de fixation (40),
dans lequel il est prévu un moyen de fermeture (34) qui sert à fermer l'ouverture (33),
dans lequel le moyen de fixation (40) comprend une partie de fixation côté rembourrage (41), qui est fixée sur le rembourrage (20), et une partie de fixation côté habillage (42), qui est fixée sur l'habillage interchangeable (32),
dans lequel la partie de fixation côté rembourrage (41) et la partie de fixation côté habillage (42) sont reliées l'une à l'autre de façon détachable,
dans lequel la partie de fixation côté rembourrage (41) est mise en place dans la mousse et/ou reliée au bâti de siège (11), et
dans lequel la partie de fixation côté habillage (42) s'étend le long d'un renfoncement (25) du rembourrage (20) et est logée dans le renfoncement (25).

2. Siège selon la revendication 1, **caractérisé en ce que** la partie de fixation côté rembourrage (41) est intégrée au moins partiellement par moussage dans la mousse.

3. Siège selon la revendication 1, **caractérisé en ce que** le moyen de fermeture (34) comprend au moins une fermeture à glissière (35) et/ou au moins une fermeture agrippante (36) et/ou au moins un bouton-pression (37).

4. Siège selon la revendication 1, **caractérisé par** :
une partie d'assise (22) et/ou
un dossier (23) et/ou
un appui-tête (24) ;
dans lequel la surface d'utilisation (21) s'étend sur la partie d'assise (22) et/ou sur le dossier (23) et/ou sur l'appui-tête (24).

5. Siège selon l'une des revendications 1 à 4, **caractérisé en ce que** l'habillage interchangeable (32) et/ou l'habillage partiel (31) sont en un matériau textile et/ou en matière plastique et/ou en cuir.

6. Siège selon la revendication 1, **caractérisé en ce que** l'habillage interchangeable (32) comprend un doublage en mousse (39) au-dessous de la charmeuse (38).

7. Siège selon l'une des revendications 1 à 6, **caractérisé en ce que** la partie de fixation côté rembourrage (41) est agencée dans le renfoncement (25).

8. Siège selon l'une des revendications 1 à 7, **caractérisé en ce que** la partie de fixation côté habillage (42) comprend au moins un cordon de fixation (43) qui est relié de façon détachable et de préférence en coopération de formes avec la partie de fixation côté rembourrage (41).

9. Siège selon la revendication 8, **caractérisé en ce que** la partie de fixation côté habillage (42) comprend au moins une patte (44), et le cordon de fixation (43) est reçu en coopération de formes et de façon détachable dans la patte (44).

10. Siège selon la revendication 8 ou 9, **caractérisé en ce que** le cordon de fixation (43) comprend au moins un oeillet (45) et la partie de fixation côté rembourrage (41) comprend au moins un crochet (46), et le crochet (46) est relié de façon détachable avec l'oeillet (45).

11. Siège selon l'une des revendications 8 à 10, **caractérisé en ce que** le cordon de fixation (43) est constitué par un fil métallique, de préférence un fil en acier-ressort, et/ou en matière plastique.

12. Siège selon l'une des revendications 1 à 11, **caractérisé en ce que** la partie de fixation côté rembourrage (41) comprend au moins une première douille (47), et la partie de fixation côté habillage (42) comprend au moins une tige (48), qui est reliée de façon détachable avec la première douille (47).

13. Siège selon la revendication 12, **caractérisé en ce que** la partie de fixation côté rembourrage (41) inclut au moins un arceau (49), dans lequel la première douille (47) est fixée sur l'arceau (49), et dans lequel l'arceau (49) est de préférence mis en place dans la mousse, et de façon encore plus préférée est intégré par moussage dans la mousse.

14. Siège selon l'une des revendications 1 à 13, **caractérisé en ce que** la partie de fixation côté rembourrage (41) comprend au moins une plaque à trous (50), qui est de préférence mise en place dans la mousse, et de façon encore plus préférée intégrée par moussage dans la mousse, et de préférence au moins un clip de verrouillage (51), qui est relié en coopération de formes avec la plaque à trous (50), et la partie de fixation côté habillage (42) comprend une seconde douille (52) qui est reliée de façon détachable avec le clip de verrouillage (51).
